# EUROPÄISCHE PATENTSCHRIFT

(11) **EP 0 714 319 B1**
(45) Veröffentlichungstag und Bekanntmachung des Hinweises auf die Patenterteilung: **17.06.1998**
(21) Anmeldenummer: 94923672.3
(22) Anmeldetag: 19.08.1994
(51) Int. Cl.: B01D 41/04, B08B 3/02, B08B 9/32, B08B 9/30

(54) **VERFAHREN UND AUFBEREITUNGSANLAGE ZUR REGENERATION VON WECHSELFILTERN**
PROCESS AND CONDITIONING PLANT FOR REGENERATING EXCHANGEABLE FILTERS
PROCEDE ET INSTALLATION DE TRAITEMENT POUR LA REGENERATION DE FILTRES REMPLAçABLES

(30) Priorität: 21.08.1993 DE 4328214
(43) Veröffentlichungstag der Anmeldung: 05.06.1996
(73) Patentinhaber: Osterwald, Marc, 38118 Braunschweig (DE); Hein, Marco, 38104 Braunschweig (DE); Utermöhlen, Ralf, Dr., 38102 Braunschweig (DE)
(72) Erfinder: Osterwald, Marc, 38118 Braunschweig (DE); Hein, Marco, 38104 Braunschweig (DE); Utermöhlen, Ralf, Dr., 38102 Braunschweig (DE)
(74) Vertreter: Rehmann, Klaus-Thorsten, Dipl.-Ing.
(86) Internationale Anmeldenummer: DE9400972
(87) Internationale Veröffentlichungsnummer: WO9505883

(56) Entgegenhaltungen:
- EP-A- 0 209 064
- EP-A- 0 533 353
- DE-A- 3 436 154
- GB-A- 966 858
- US-A- 3 538 926
- US-A- 3 765 051
- DATABASE WPI Week 8652, Derwent Publications Ltd., London, GB; AN 86-345577 & SU,A,1 230 639 (CHEBUKANOV) 15. Mai 1986

## Beschreibung

Die Erfindung betrifft ein Verfahren zur Regeneration von im Ölkreislauf von Verbrennungsmotoren einsetzbaren Wechselfiltern mit einem in einem Gehäuse eingeschlossenen Partikel zurückhaltenden Filterelement, eine Aufbereitungsanlage zur Durchführung des Verfahrens und einen stapelbaren Transportbehälter zur Verwendung in einer solchen Aufbereitungsanlage.

Wechselfilter mit einem Partikel zurückhaltenden Filterelement haben in den letzten Jahrzehnten weite Verbreitung auf verschiedenen Gebieten der Technik gefunden, insbesondere in Hydraulik- und Schmierölkreisläufen. Die Vorzüge solcher Filter bestehen insbesondere im günstigen Preis und in einer leichten und schnellen Wechselbarkeit bei minimalem Anlagenstillstand und geringstem Arbeitszeitbedarf.

Nachteilig bei solchen Filtern ist jedoch der anfallende Abfall, denn solche Filter müssen aufgrund ihres Gehaltes an Restfluid und Filtrat als besonders überwachungsbedürftiger Abfall (Sondermüll) behandelt werden. Als besonders problematisch hat sich dabei die anfallende Menge an solchen Wechselfiltern herausgestellt. Allein aus dem Gebrauch als Kraftfahrzeug-Ölfilter fallen jährlich in Deutschland mehr als 35 Millionen solcher gebrauchter Wechselfilter an.

Üblicherweise wird der größte Teil dieser Filter in Sondermüllverbrennungsanlagen verbrannt. Aufgrund des hohen Reststoffaufkommens und der aufwendigen Abgasreinigung ist eine solche Beseitigung nicht nur teuer, sondern löst auch das Abfallproblem nicht, da die Reststoffe aus der Verbrennung, die einen hohen Metallanteil aufweisen, und die Abfallstoffe aus der Rauchgaswäsche deponiert werden müssen.

Zur Entschärfung dieses Problems wurde in der EP-A-0 279 469 eine Anlage vorgeschlagen, mit der solche gebrauchte Wechselfilter zerlegt werden können. Dadurch wird es möglich, den ölgetränkten Filtereinsatz und das Restöl einerseits wie bisher einer Verbrennung zuzuführen, andererseits die Metallbestandteile als Schrott zu verwerten.

Auch wenn die Verwendung einer solchen Anlage sicherlich eine gewisse Entlastung des Deponieraums bewirkt, so wirkt sich diese Entlastung nur vorübergehend aus, da auch die Menge an verwertbarem Schrott bei der hierzulande zurückgehenden Stahlproduktion zurückgehen wird. Ferner wird auch die Möglichkeit, Altöl wieder aufzuarbeiten, auf diese Weise nicht genutzt.

Dazu kommt, daß die Metallbestandteile von daran anhaftenden Ölresten befreit werden müssen. Dies erfolgt üblicherweiSe mit organischen Lösungsmitteln, die nicht nur leicht flüchtig sind, sondern deren Beseitigung nach Gebrauch wiederum hinsichtlich der Umweltbelastung erheblich Probleme aufwirft.

Aus der GB-A-0 966 858 ist ein Verfahren zur Regeneration von im Ölkreislauf einsetzbaren Filtern bekannt. Der Filter muß jedoch ohne Gehäuse in ein Lösungsmittelbad gelegt werden und wird dann durch Vibration gereinigt. Die Reinigungsflüssigkeit wird durch das Filterelement hindurchgesaugt, während ein Vibrator das Filterelement mit Ultraschall-Frequenz anregt.

Nachteilig an dem bekannten Verfahren ist, daß das Filterelement aus dem Filtergehäuse entfernt werden muß, damit die Ultraschall-Reinigung vorgenommen werden kann. Lösungsmittel als später zu entsorgende Reinigungsflüssigkeit wirft dabei weitere Probleme auf. Außerdem muß das Lösungsmittel sicher aus dem Filterelement entfernt werden, damit beim späteren Einsetzen des gereinigten Filterelements in den Ölkreislauf des Verbrennungsmotors keine Beeinflussung des Motoröles erfolgt.

Der Erfindung liegt daher die Aufgabe zugrunde das eingangs beschriebene Verfahren zu verbessern und ein Verfahren und Vorrichtungen zu liefern, mit denen das Abfallvolumen durch gebrauchte Wechselfilter vermindert wird.

Diese Aufgabe wird erfindungsgemäß gelöst durch ein Verfahren nach Anspruch 1.

Durch das erfindungsgemäße Verfahren wird eine Regeneration der gebrauchten Wechselfilter und damit eine Wiederverwendung der Wechselfilter möglich. Mit der Durchflußmessung und dem Vergleichen des gemessenen Strömungswiderstandes kann die Qualität der regenerierten Wechselfilter überprüft und sichergestellt werden, indem unbrauchbare Wechselfilter aussortiert werden können. Durch die Verwendung eines dünnflüssigen, mit dem Motoröl verträglichen Öles als Spülmittel kann auf einen Trocknungsschritt verzichtet werden.

Die Aufgabe wird ferner erfindungsgemäß gelöst durch eine Aufbereitungsanlage nach Anspruch 9

Zur automatischen Beschickung der Aufbereitungsanlage ist vorzugsweise eine Zuführeinrichtung für zu regenerierende Wechselfilter vorgesehen.

Mit einer erfindungsgemäßen Anlage ist es nunmehr möglich, gebrauchte Wechselfilter unter Ausnutzung der Vorzüge des erfindungsgemäßen Verfahrens großtechnisch zu regenerieren und als praktisch neuwertige Wechselfilter wiederverwendbar zu machen.

Weiterhin wird die Aufgabe erfindungsgemäß gelöst durch einen stapelbaren Transportbehälter zur Aufnahme von Wechselfiltern nach Anspruch 20

Der erfindungsgemäße Transportbehälter ermöglicht den einfachen und kostengünstigen Vertrieb neuer bzw. neuwertiger Wechselfilter und die Rückführung gebrauchter Wechselfilter im Mehrwegverfahren, wie es z.B. von Getränkeflaschen bekannt ist. Dabei erlauben die Manschetten einen sicheren Halt verschiedener Filtergrößen, sodaß diese verschiedenen Filtergrößen gemischt in einem Transportbehälter aufbewahrt und transportiert werden können. Dies ist besonders bei der Rückführung der gebrauchten Wechselfilter aus kleineren Werkstätten oder z.B. von Tankstellen von Vorteil.

Das erfindungsgemäße Verfahren umfaßt vorzugsweise das Erfassen des Typs des Wechselfilters. Dies ermöglicht die optimale Anpassung von Verfahrensparametern an den jeweils verarbeiteten Filtertyp.

Vorzugsweise ist das erfindungsgemäße Verfahren dadurch gekennzeichnet, daß die vorgegebenen Grenzwerte typbezogen sind. Dadurch ist es möglich, eine hohe Qualität der regenerierten Filter bei optimaler Wirtschaftlichkeit des Verfahrens sicherzustellen.

In einer bevorzugten Ausführungsform ist das erfindungsgemäße Verfahren gekennzeichnet durch folgenden Schritt: Kennzeichnen eines Wechselfilters als unbrauchbar, wenn der bei diesem Wechselfilter gemessene Strömungswiderstand außerhalb des durch den oder die vorgegebenen Grenzwerte begrenzten Bereiches liegt.

Dadurch wird eine flexiblere Gestaltung des Prozesses ermöglicht, da ein unbrauchbarer Filter nicht nur unmittelbar bei der Feststellung aus dem Prozeß entfernt werden kann, sondern auch an jeder beliebigen folgenden Stelle, um ein unnötiges Durchlaufen folgender Verfahrensschritte zu vermeiden, oder auch erst insbesondere am Ende der Prozeßführung.

Vorzugsweise erfolgt das Entfernen der Fluidreste aus dem Wechselfilter beim Spülen des Filterelementes. Durch diese Integration der beiden Verfahrensschritte wird die Wirtschaftlichkeit bei der Anwendung des Verfahrens weiter verbessert, insbesondere, da für die Messung kein gesondertes Fluid erforderlich ist.

Weiterhin ist es aus dem gleichen Grunde zweckmäßig, wenn das Messen des Strömungswiderstandes beim Spülen des Filterelementes erfolgt.

Diese Möglichleit läßt sich zur Qualitätssicherung für die regenerierten Wechselfilter besonders wirksam einsetzen, wenn für die Messung des Strömungswiderstandes beim Spülen und beim Trocknen jeweils verschiedene Grenzwerte vorgegeben sind.

Um das Spülmittel umweltfreundlich in einem geschlossenen Kreislauf einsetzen zu können, ist es zweckmäßig, wenn nach dem Spülen des Filterelementes Fluidreste von dem Spülmittel separiert werden.

Für eine bessere Akzeptanz beim Verbraucher und um eine neuen Wechselfiltern vergleichbare Gewährleistung übernehmen zu können, ist es günstig, wenn das Verfahren noch folgende Schritte umfaßt: Entfernen eines alten Dichtungsringes von dem Wechselfilter und Bestücken des Wechselfilters mit einem neuen Dichtungsring.

Mit den Merkmalen der Unteransprüche 10 bis 16 sind zweckmäßige Ausgestaltungen der erfindungsgemäßen Aufbereitungsanlage beschrieben, deren Vorzüge sich analog aus den zuvor genannten vorteilhaften Ausgestaltungen des erfindungsgemäßen Verfahrens ergeben.

Eine weitere zweckmäßige Ausgestaltung der erfindungsgemäßen Anlage ist dadurch gekennzeichnet, daß die Zuführeinrichtung ein lineares Förderband ist. Dies ermöglicht die Verwendung üblicher Anlagenkomponenten sowie die Anordnung von Aggregaten beiderseits der Zuführeinrichtung. Eine solche Anordnung erscheint ferner für Anlagen mit großer Kapazität zweckmäßig, da so mehrere Anlegen nebeneinander installiert werden können.

Es kann aber auch für kleinere Anlagen zweckmäßig sein, wenn die Zuführeinrichtung ein Rundtisch ist. Hierdurch läßt sich ein besonders kompakter Aufbau der Anlage erreichen, wobei z.B. ein Bestückungsroboter gleichzeitig zur Beschickung und Entnahme der Wechselfilter aus der Anlage dienen kann.

Insbesondere ist es für einen automatischen Betrieb einer größeren Aufbereitungsanlage zweckmäßig, wenn die Zuführeinrichtung eine automatische Ladestation zur Entnahme von Wechselfiltern aus einem angepaßten Transportbehälter aufweist.

Ein erfindungsgemäßer Transportbehälter ist zweckmäßigerweise dadurch gekennzeichnet, daß die Schlitze die Manschette in etwa gleich große Segmente unterteilen. Dadurch stellt sich eine etwa zentrische Position des Wechselfilters in der Öffnung ein, was besonders bei der automatisierten Entnahme der Wechselfilter aus dem Transportbehälter günstig ist.

Für den Transport gebrauchter Wechselfilter ist es besonders zweckmäßig, wenn der Boden als Auffangwanne für aus den Wechselfiltern austretendes Fluid ausgebildet ist.

Da die Wechselfilter üblicherweise ein Gehäuse aus Stahlblech aufweisen, ist es für einen guten Halt der Filter in dem Transportbehälter vorteilhaft, wenn der Boden eine Anzahl magnetischer Bereiche aufweist, die jeweils einer Öffnung im Zwischenboden zugeordnet sind.

Dies läßt sich einfach realisieren, wenn die magnetischen Bereiche durch auf dem Boden befestigte Magnete gebildet werden.

Um gleichmäßige Entnahmekräfte zu erhalten und die Magnete vor Korrosion zu schützen, ist es günstig, wenn die Magnete zumindest teilweise kunststoffummantelt sind.

Insbesondere um die für eine automatisierte Entnahme der Wechselfilter aus dem Transportbehälter günstige Ausrichtung der Wechselfilter sicherzustellen, ist es ferner vorteilhaft, wenn auf dem Boden eine Anzahl Stützelemente angeordnet ist, die jeweils einer Öffnung zugeordnet sind und etwa konzentrisch zu dieser liegen, insbesondere, wenn das Stützelement im wesentlichen ringförmig ist.

Die Erfindung soll im folgenden anhand von in den Zeichnungen dargestellten Ausführungsbeispielen näher erläutert werden. Es zeigen:
- **Figur 1**: eine schematisierte Seitenansicht einer erfindungsgemäßen Aufbereitungsanlage zur Durchführung des erfindungsgemäßen Verfahrens;
- **Figur 2**: eine schematisierte Draufsicht auf eine weitere erfindungsgemäße Aufbereitungsanlage;
- **Figur 3**: eine Seitenansicht eines erfindungsgemäßen Transportbehälters in teilweiser Schnittdarstellung;
- **Figur 4**: eine Draufsicht eines erfindungsgemäßen Transportbehälters; und
- **Figur 5**: eine schematisierte Schnittdarstellung einer Spülvorrichtung einer erfindungsgemäßen Aufbereitungsanlage mit einem zu regenerierenden Wechselfilter.

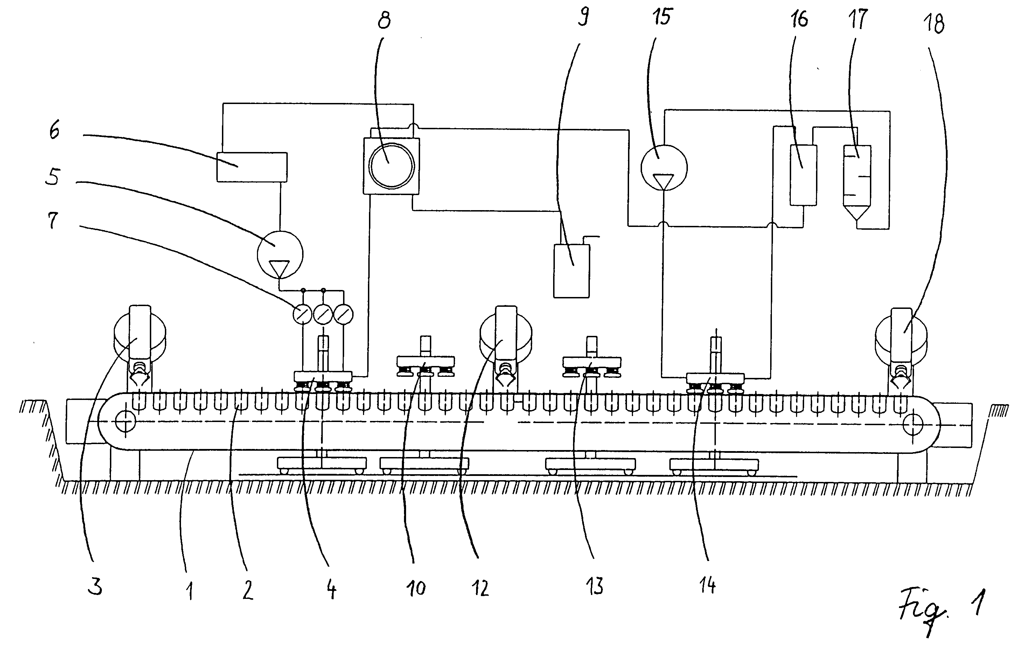

Die in Figur 1 dargestellte Aufbereitungsanlage umfaßt ein lineares Förderband 1, auf das die gebrauchten Wechselfilter 2 von einer automatischen Ladestation 3 gestellt werden. Das Förderband 1 transportiert, über eine nicht dargestellte Steuerung angetrieben, die Wechselfilter 2 zu einer Spülvorrichtung 4. Die dargestellte Spülvorrichtung 4 ist zum gleichzeitigen Spülen von drei Wechselfiltern 2 vorgesehen. Die drei Anschlußstücke der Spülvorrichtung 4 sind einzeln vertikal geführt, damit verschiedene Filtertypen mit unterschiedlich großen Gehäusen 36 gemischt verarbeitet werden können.

Durch die Spülvorrichtung 4 wird das von einer Pumpe 5 aus einem Vorratsbehälter 6 geförderte Spülmittel über getrennte Zuleitungen in die Wechselfilter 2 geleitet. Dabei ist in jede der Zuleitungen jeweils eine Meßeinrichtung 7 integriert, mit der die Strömungswiderstände der jeweiligen Wechselfilter 2 erfaßt werden.

Das aus den Wechselfiltern 2 austretende mit Restfluid und dem herausgespülten Filtrat verunreinigte Spülmittel wird über eine gemeinsame Leitung in einen Separator 8 gegeben. Dort werden die Filtratrückstände und das Restfluid abgetrennt und das Restfluid in einen Auffangbehälter 9 geleitet. Das in dem Auffangbehälter 9 gesammelte Restfluid kann dann einer üblichen Aufarbeitung zugeführt werden.

Von der Spülvorrichtung 4 werden die Wechselfilter 2 durch das Förderband 1 zu einer Demontageeinrichtung 10 transportiert, mit der alte Dichtungsringe 11 von den Wechselfiltern 2 entfernt werden.

An die Demontageeinrichtung 10 schließt sich ein Ausschußgreifer 12 an, der nach der Messung des Strömungswiderstandes durch eine nicht dargestellte Vergleichseinrichtung, die die gefundenen Meßwerte mit einem oder mehreren Grenzwerten vergleicht, als unbrauchbar erkannte Wechselfilter 2 von dem Förderband 1 entfernt.

Nachfolgend ist ein Montageautomat 13 angeordnet, durch den die Wechselfilter 2 mit einem neuen Dichtungsring 11 versehen werden.

Von dem Montageautomaten 13 werden die Wechselfilter 2 zu einer Trockenvorrichtung 14 befördert. In der Trockenvorrichtung 14 werden die Wechselfilter 2 mit von einen Kompressor 15 gelieferter Luft durchblasen, um in den Wechselfiltern 2 verbliebene Spülmittelreste zu entfernen.

Die Luft wird nach dem Austreten aus den Wechselfiltern 2 in einem Abscheider 16 von Spülmittelresten befreit, die über eine Rückförderleitung dem Separator 8 zugeführt werden. Die von den Spülmittelresten befreite Luft wird noch durch einen Filter 17 geleitet, bevor sie im Kompressor 15 wieder verdichtet wird.

Wenn als Spülmittel ein dünnflüssiges Öl eingesetzt wird, das sich bei Wiedereinsatz des Filters mit dem Motoröl verträgt, kann auf die Trocknung des Filters und auf die Aufbereitung des Spülmittels verzichtet werden.

Schließlich werden die nunmehr regenerierten Wechselfilter 2 zu einer Abführeinrichtung 18 transportiert, durch die die Wechselfilter 2 von dem Förderband 1 entfernt und in geeignete Transportbehälter 19 verpackt werden. Die regenerierten Wechselfilter 2 stehen nunmehr zum Versand zur Wiederverwendung bereit.

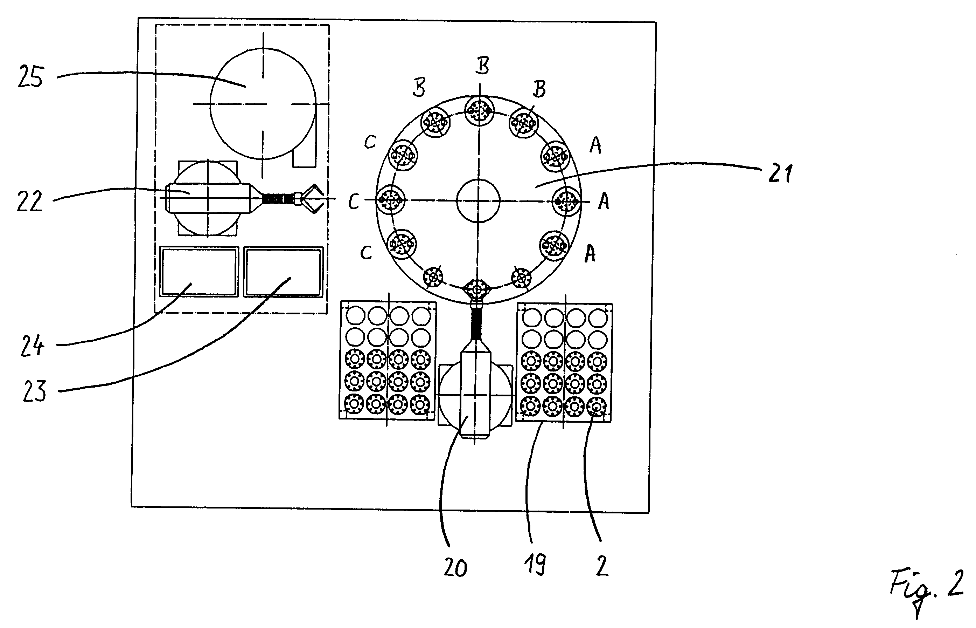

Die in Figur 2 dargestellte Aufbereitungsanlage unterscheidet sich von der zuvor beschriebenen Anlage durch eine besonders kompakte Anordnung.

Auch bei diesem Ausführungsbeispiel der Erfindung werden jeweils drei Wechselfilter 2 gleichzeitig einer Bearbeitungsstufe unterzogen.

Die Wechselfilter 2 werden durch einen Greifroboter 20 einem speziellen Transportbehälter 19 entnommen und auf einen Rundtisch 21 gesetzt. Anschließend wird der Rundtisch um 60° gedreht, sodaß diese Wechselfilter 2 in den Positionen A mit einer hier nicht dargestellten Spül- und Meßvorrichtung gespült und überprüft werden können.

Nach dem folgenden Vorschubtakt werden diese Wechselfilter 2 in den Positionen B wie bei dem zuvor beschriebenen Ausführungsbeispiel getrocknet.

In den Positionen C werden die alten Dichtungsringe 11 durch einen Montageroboter 22 entfernt, in einen entsprechenden Dichtungsring-Sammelbehälter 23 gegeben, unbrauchbare Wechselfilter 2 von dem Rundtisch 21 entfernt und in einen Sammelbehälter 24 gegeben. Die auf dem Rundtisch 21 verbleibenden Wechselfilter 2 werden jeweils mit einem neuen Dichtungsring 11 bestückt, die dem Montageroboter 22 von einem Schwingförderer 25 bereitgestellt werden.

Die regenerierten Wechselfilter 2 werden abschließend in der Ausgangsstellung des Rundtisches 21 von dem Greifroboter 20 entfernt und in einem weiteren Transportbehälter 19 abgelegt. Die regenerierten Wechselfilter 2 stehen somit zum Vertrieb und zur Wiederverwendung zur Verfügung.

Die in den Behältern 23 und 24 befindlichen alten Dichtungsringe 11 und die nicht mehr verwendbaren Wechselfilter 2 können einer geeigneten Entsorgung zugeführt werden.

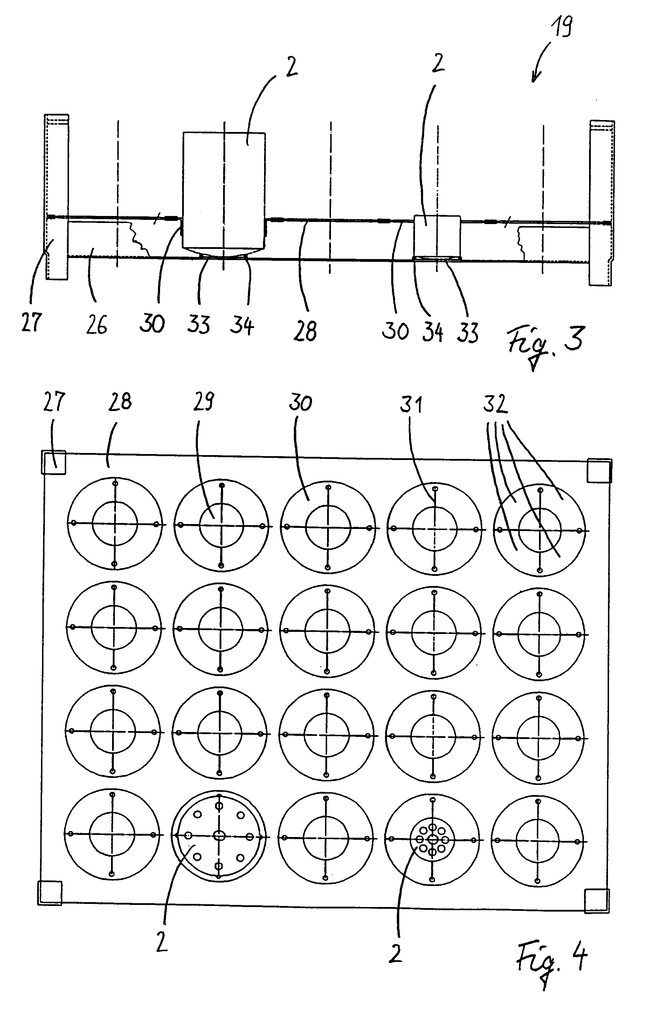

Der in den Figuren 3 und 4 dargestellte stapelbare Transportbehälter 19 besteht aus einem als Auffangwanne ausgebildeten Boden 26 und vier an den Ecken befestigten Stützen 27, die so ausgebildet sind, daß ihre Unterseiten in die Oberseiten von darunter befindlichen Stützen 27 einsteckbar sind.

Über dem Boden 26 erstreckt sich etwa parallel dazu ein Zwischenboden 28. Der Abstand zwischen Boden 26 und Zwischenboden 28 entspricht etwa der Gehäusehöhe des jeweiligen niedrigsten handelsüblichen Wechselfilters 2. Der Zwischenboden 28 weist eine Vielzahl von Öffnungen 29 auf, die jeweils teilweise durch eine ringförmige elastische Manschette 30 abgedeckt sind. Die Manschetten 30 sind durch vier Schlitze 31 in vier Segmente 32 unterteilt.

Durch die Öffnungen 29 werden die Wechselfilter 2 auf den Boden 26 gestellt. Dabei passen sich die Manschetten 30 dem jeweiligen Durchmesser des Wechselfilters 2 an und stützen diesen, um ein Umkippen des Wechselfilters 2 und damit eine eventuelles Auslaufen von Restfluid aus dem Wechselfilter 2 zu vermeiden.

Unterhalb der Öffnungen 29 sind konzentrisch zu den Öffnungen 29 auf dem Boden 26 flache kunstoffummantelte Magnete 33 angebracht, die von ringförmigen Stützelementen 34 aus ölbeständigem Kunststoff umgeben sind.

Diese Teile sollen zusammen mit den Manschetten 30 eine vertikale Ausrichtung der Wechselfilter 2, die normalerweise einen gekrümmten Boden aufweisen, sicherstellen und den Wechselfilter 2 in dieser Stellung festhalten. Dadurch werden Störungen beim automatisierten Entnehmen von Wechselfiltern 2 in einer Ladestation 3 einer erfindungsgemäßen Aufbereitungsanlage vermieden.

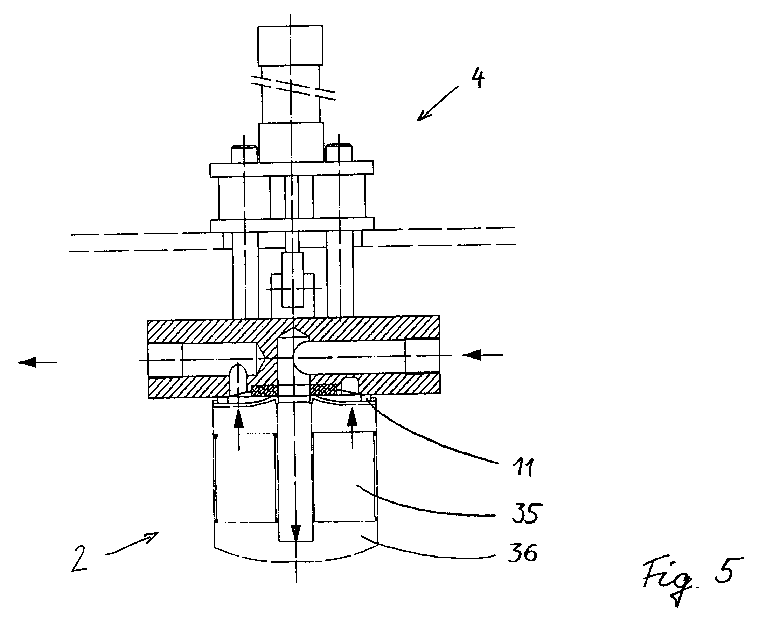

Ein Wechselfilter 2, wie er in Figur 5 dargestellt ist, ist nicht Gegenstand der Erfindung und entspricht in seinem Aufbau im wesentlichen den bekannten Wechselfiltern, insbesondere entsprechen seine Außen- und Anschlußmaße den geltenden Normen (DIN/ISO 6415). Jedoch besteht sein Filterelement 35 nicht wie üblich aus einem Filterpapier, sondern aus einem oberflächenveredelten Polymer.

Vorzugsweise ist dieses Filterlement 35 gesintert, so daß sich bei der Fertigung automatisch eine entprechend einzustellende Porösität ergibt. Verwendet man als Polymer ein Polyolefin, kann ein solches Filterelement 35 schadstoffarm in einer Müllverbrennungsanlage verbrannt werden, wenn der Wechselfilter 2 wegen übermäßiger Verschmutzung oder mechanischer Beschädigung nicht mehr verwendet werden kann.

Wird das Filterelement 35 aus einem gesinterten Metall hergestellt, läßt sich durch die mechanische Stabilität eine erheblich längere Nutzungsdauer erzielen. Auch ist ein solches Filterlement 35 unempfindlich gegen Stöße und Vibrationen. Die Funktion eines Wechselfilters 2 mit einem solchen Filterlement 35 bleibt auch bei einer Deformation seines Gehäuses 36 weitgehend erhalten.

Alternativ kann das Filterelement 35 auch aus einem geschäumten Glas, aus Mineralfasern oder einem Mineralfasergewebe oder aus Keramikmaterial hergestellt werden. Auch bei dieser Herstellungsweise läßt sich die Porösität gut einstellen. Zudem ist ein solches Filterlement 35 bei elastischer Befestigung in dem Gehäuse 36 des Wechselfilter 2 mechanisch, chemisch und thermisch extrem belastbar. Aus diesen Gründen wird eine nahezu unbegrenzte Anzahl an Regenerationszyklen möglich.

## Patentansprüche

1. Verfahren zur Regeneration von im Ölkreislauf von Verbrennungsmotoren einsetzbaren Wechselfiltern (2) mit einem in einem Gehäuse (36) eingeschlossenem Partikel zurückhaltenden Filterelement (35), mit folgenden Schritten:
a) Entfernen von Fluidresten aus dem Wechselfilter (2),
b) Spülen des Wechselfilters mit einem dünnflüssigen, sich mit dem Motorenöl vertragenden Öl als Spülmittel entgegen der Durchflußrichtung des Wechselfilters (2) beim Gebrauch, zur Reinigung des Filterelementes (35),
c) Entleeren des Spülmittels unter Belassung etwaiger Spülmittelreste im Wechselfilter,
d) Messen des Strömungswiderstandes des Filterelementes (35)
e) Vergleichen des gemessenen Strömungswiderstandes mit einem oder mehreren vorgegebenen Grenzwerten.

2. Verfahren nach Anspruch 1, **gekennzeichnet durch** folgenden Schritt: Erfassen des Typs des Wechselfilters (2).

3. Verfahren nach Anspruch 2, **dadurch gekennzeichnet,** daß die vorgegebenen Grenzwerte typbezogen sind.

4. Verfahren nach einem der vorhergehenden Ansprüche, **gekennzeichnet durch** folgenden Schritt: Kennzeichnen eines Wechselfilters (2) als unbrauchbar, wenn der bei diesem Wechselfilter (2) gemessene Strömungswiderstand außerhalb des durch den oder die vorgegebenen Grenzwerte begrenzten Bereiches liegt.

5. Verfahren nach einem oder mehreren der vorhergehenden Ansprüche, **dadurch gekennzeichnet,** daß das Entfernen der Fluidreste aus dem Wechselfilter (2) beim Spülen des Filterelementes (35) erfolgt.

6. Verfahren nach einem oder mehreren der vorhergehenden Ansprüche, **dadurch gekennzeichnet,** daß das Messen des Strömungswiderstandes beim Spülen des Filterelementes (35) erfolgt.

7. Verfahren nach einem oder mehreren der vorhergehenden Ansprüche, **dadurch gekennzeichnet,** daß nach dem Spülen des Filterelementes (35) Fluidreste von dem Spülmittel separiert werden.

8. Verfahren nach einem oder mehreren der vorhergehenden Ansprüche **gekennzeichnet durch** folgende Schritte: Entfernen eines alten Dichtungsringes (11) von dem Wechselfilter (2) und Bestücken des Wechselfilters (2) mit einem neuen Dichtungsring (11).

9. Aufbereitungsanlage zur Durchführung eines Verfahrens nach einem der Ansprüche 1 bis 8, **gekennzeichnet durch** eine Spülvorrichtung (4) zum Spülen eines Filterelementes (35) eines Wechselfilters (2), eine oder mehrere Meßeinrichtungen (7) zur Erfassung des Strömungswiderstandes eines Wechselfilters (2) und eine Vergleichseinrichtung zum Vergleich eines gemessenen Strömungswiderstandes mit einem oder mehreren vorgegebenen Grenzwerten sowie eine Abführeinrichtung (18, 20) für regenerierte Wechselfilter (2).

10. Aufbereitungsanlage nach Anspruch 9, **gekennzeichnet durch** wenigstens eine Zuführeinrichtung (1,21) für zu regenerierende Wechselfilter (2).

11. Aufbereitungsanlage nach Anspruch 9 oder 10, **gekennzeichnet durch** eine Einrichtung zur Erfassung des Typs des Wechselfilters (2).

12. Aufbereitungsanlage nach Anspruch 11, **dadurch gekennzeichnet,** daß einem Wechselfilter-Typ ein oder mehrere Grenzwerte zugeordnet sind.

13. Aufbereitungsanlage nach einem der Ansprüche 9 bis 12, **gekennzeichnet durch** eine Einrichtung (12, 22) zum Entfernen unbrauchbarer Wechselfilter (2).

14. Aufbereitungsanlage nach einem der Ansprüche 10 bis 13, **gekennzeichnet durch** eine Einrichtung (8) zur Separation von Fluidresten aus einem in der Spülvorrichtung (4) verwendeten Spülmittel.

15. Aufbereitungsanlage nach einem der Ansprüche 10 bis 14, **gekennzeichnet durch** eine Einrichtung (10, 13, 22) zum Entfernen eines alten Dichtringes (11) von dem Wechselfilter (2) und Montieren eines neuen Dichtringes (11).

16. Aufbereitungsanlage nach einem oder mehreren der Ansprüche 10 bis 17, **dadurch gekennzeichnet,** daß eine der Meßeinrichtungen (7) in die Spülvorrichtung (4) integriert ist.

17. Aufbereitungsanlage nach Anspruch 10, **dadurch gekennzeichnet,** daß die Zuführeinrichtung ein lineares Förderband (1) ist.

18. Aufbereitungsanlage nach Anspruch 10, **dadurch gekennzeichnet,** daß die Zuführeinrichtung ein Rundtisch (21) ist.

19. Aufbereitungsanlage nach Anspruch 17 oder 18, **dadurch gekennzeichnet,** daß die Zuführeinrichtung eine automatische Ladestation (3, 20) zur Entnahme von Wechselfiltern (2) aus einem angepaßten Transportbehälter (19) aufweist.

20. Stapelbarer Transportbehälter zur Aufnahme von Wechselfiltern (2) und zur Verwendung in einer Aufbereitungsanlage nach einem der Ansprüche 9 bis 22, **gekennzeichnet durch** einen Boden (26), der als Auffangwanne für aus den Wechselfiltern (2) austretendes Fluid ausgebildet ist und die zu transportierenden Wechselfilter (2) trägt, einen Zwischenboden (28) mit einer Vielzahl von Öffnungen (29), durch die die zu transportierenden Wechselfilter (2) auf den Boden (26) stellbar sind, wobei die Öffnungen (29) durch je eine elastische Manschette (30) mit Schlitzen (31) zumindest teilweise abgedeckt sind, die sich dem zu transportierenden Wechselfilter (2) anpaßt und diesen stützt.

21. Transportbehälter nach Anspruch 20, **dadurch gekennzeichnet,** daß die Schlitze (31) die Manschette (30) in etwa gleich große Segmente (32) unterteilen.

22. Transportbehälter nach einem der Ansprüche 20 bis 21, **dadurch gekennzeichnet,** daß der Boden (26) eine Anzahl magnetischer Bereiche aufweist, die jeweils einer Öffnung (29) im Zwischenboden (28) zugeordnet sind.

23. Transportbehälter nach Anspruch 22, **dadurch gekennzeichnet,** daß die magnetischen Bereiche durch auf dem Boden (26) befestigte Magnete (33) gebildet werden.

24. Transportbehälter nach Anspruch 23, **dadurch gekennzeichnet**, daß die Magnete (33) zumindest teilweise kunstoffummantelt sind.

25. Transportbehälter nach einem der Ansprüche 20 bis 24, **dadurch gekennzeichnet,** daß auf dem Boden (26) eine Anzahl Stützelemente (34) angeordnet ist, die jeweils einer Öffnung (29) zugeordnet sind und etwa konzentrisch zu dieser liegen.

26. Transportbehälter nach Anspruch 25, **dadurch gekennzeichnet,** daß das Stützelement (34) im wesentlichen ringförmig ist.

## Claims

1. Process for the regeneration of easy-change filters (2) which comprise a filter element (35) that is enclosed in a casing (36) and withholds particles and which are capable of being inserted in the oil circuit of internal combustion engines, comprising the following steps:
a) removal of fluid residues from the easy-change filter (2),
b) flushing of the easy-change filter contrary to the direction of flow in the easy-change filter (2) during use with a highly fluid oil by way of flushing agent that is compatible with the engine oil, for the purpose of cleaning the filter element (35),
c) evacuation of the flushing agent, leaving any possible flushing-agent residues in the easy-change filter,
d) measurement of the flow resistance of the filter element (35),
e) comparison of the measured flow resistance with one or more predetermined limiting values.

2. Process according to Claim 1, **characterised by** the following step: detection of the type of easy-change filter (2).

3. Process according to Claim 2, **characterised in that** the predetermined limiting values are type-specific.

4. Process according to one of the preceding claims, **characterised by** the following step: tagging of an easy-change filter (2) as unusable if the flow resistance measured in respect of this easy-change filter (2) lies outside the range bounded by the predetermined limiting value or values.

5. Process according to one or more of the preceding claims, **characterised in that** the fluid residues are removed from the easy-change filter (2) in the course of flushing the filter element (35).

6. Process according to one or more of the preceding claims, **characterised in that** the flow resistance is measured in the course of flushing the filter element (35).

7. Process according to one or more of the preceding claims, **characterised in that** fluid residues are separated from the flushing agent after flushing of the filter element (35).

8. Process according to one or more of the preceding claims, **characterised by** the following steps: removal of an old sealing ring (11) from the easy-change filter (2) and provision of the easy-change filter (2) with a new sealing ring (11).

9. Reprocessing plant for implementing a process according to one of Claims 1 to 8, **characterised by** a flushing device (4) for flushing a filter element (35) pertaining to an easy-change filter (2), one or more measuring devices (7) for recording the flow resistance of an easy-change filter (2) and a comparator for comparing a measured flow resistance with one or more predetermined limiting values and also a discharge device (18, 20) for regenerated easy-change filters (2).

10. Reprocessing plant according to Claim 9, **characterised by** at least one feed device (1, 21) for easy-change filters (2) to be regenerated.

11. Reprocessing plant according to Claim 9 or 10, **characterised by** a device for detecting the type of easy-change filter (2).

12. Reprocessing plant according to Claim 11, **characterised in that** one or more limiting values are assigned to one type of easy-change filter.

13. Reprocessing plant according to one of Claims 9 to 12, **characterised by** a device (12, 22) for the removal of unusable easy-change filters (2).

14. Reprocessing plant according to one of Claims 10 to 13, **characterised by** a device (8) for the separation of fluid residues from a flushing agent that is used in the flushing device (4).

15. Reprocessing plant according to one of Claims 10 to 14, **characterised by** a device (10, 13, 22) for the removal of an old sealing ring (11) from the easy-change filter (2) and installation of a new sealing ring (11).

16. Reprocessing plant according to one or more of Claims 10 to 15, **characterised in that** one of the measuring devices (7) is integrated within the flushing device (4).

17. Reprocessing plant according to Claim 10, **characterised in that** the feed device is a linear conveyor belt (1).

18. Reprocessing plant according to Claim 10, **characterised in that** the feed device is a rotary table (21).

19. Reprocessing plant according to Claim 17 or 18, **characterised in that** the feed device comprises an automatic loading station (3, 20) for the extraction of easy-change filters (2) from an adapted transport container (19).

20. Stackable transport container for receiving easy-change filters (2) and for use in a reprocessing plant according to one of Claims 9 to 22, **characterised by** a bottom (26) which is constructed as a receiving trough for fluid emerging from the easy-change filters (2) and which carries the easy-change filters (2) to be transported, a false bottom (28) with a plurality of apertures (29), through which the easy-change filters (2) to be transported are capable of being placed on the bottom (26), whereby the apertures (29) are covered up at least partially by, in each instance, an elastic packing (30) with slots (31), which adapts itself to the easy-change filter (2) to be transported and supports the latter.

21. Transport container according to Claim 20, **characterised in that** the slots (31) subdivide the packing (30) into segments (32) of approximately equal size.

22. Transport container according to one of Claims 20 to 21, **characterised in that** the bottom (26) comprises a number of magnetic regions which are each assigned to an aperture (29) in the false bottom (28).

23. Transport container according to Claim 22, **characterised in that** the magnetic regions are formed by magnets (33) attached to the bottom (26).

24. Transport container according to Claim 23, **characterised in that** the magnets (33) are at least partially encased in plastic.

25. Transport container according to one of Claims 20 to 24, **characterised in that** a number of support elements (34) are arranged on the bottom (26) which are each assigned to an aperture (29) and are approximately concentric with respect to the latter.

26. Transport container according to Claim 25, **characterised in that** the support element (34) is substantially annular.

## Revendications

1. Procédé pour la régénération de filtres remplaçables (2) destinés à être montés dans le circuit de lubrification de moteurs à combustion et comprenant un élément filtrant (35) de retenue des particules enfermé dans un boîtier (36), comportant les étapes suivantes :
a) enlever des restes de fluide du filtre remplaçable (2),
b) rincer le filtre remplaçable avec, comme moyen de rinçage, une huile à faible viscosité compatible avec l'huile moteur, dans le sens contraire à la direction d'écoulement du filtre remplaçable (2) en service, pour nettoyer l'élément filtrant (35),
c) vider le moyen de rinçage en laissant un éventuel reste de moyen de rinçage dans le filtre remplaçable,
d) mesurer la résistance à l'écoulement de l'élément filtrant (35),
e) comparer la résistance à l'écoulement mesurée avec une ou plusieurs valeurs limites prédéterminées.

2. Procédé selon la revendication 1, caractérisé par l'étape suivante : capter le type du filtre remplaçable (2).

3. Procédé selon la revendication 2, caractérisé en ce que les valeurs limites prédéterminées sont fonction du type.

4. Procédé selon l'une ou plusieurs des revendications précédentes, caractérisé par les étapes suivantes :
caractériser un filtre remplaçable (2) comme inutilisable, lorsque la résistance à l'écoulement mesurée sur ce filtre remplaçable (2) se trouve en dehors du domaine délimité par la ou les valeurs limites prédéterminées.

5. Procédé selon l'une ou plusieurs des revendications précédentes, caractérisé en ce que l'enlèvement des restes de fluide du filtre remplaçable (2) a lieu pendant le rinçage de l'élément filtrant (35).

6. Procédé selon l'une ou plusieurs des revendications précédentes, caractérisé en ce que la mesure de la résistance à l'écoulement a lieu pendant le rinçage de l'élément filtrant (35).

7. Procédé selon l'une ou plusieurs des revendications précédentes, caractérisé en ce qu'après le rinçage de l'élément filtrant (35), des restes de fluide sont séparés du moyen de rinçage.

8. Procédé selon l'une ou plusieurs des revendications précédentes, caractérisé par les étapes suivantes : enlever un vieil anneau d'étanchéité (11) du filtre remplaçable (2) et équiper le filtre remplaçable (2) d'un nouvel anneau d'étanchéité (11).

9. Installation de traitement pour la mise en oeuvre d'une procédé selon l'une des revendications 1 à 8, caractérisée par un dispositif de rinçage (4) pour rincer un élément filtrant (35) d'un filtre remplaçable (2), un ou plusieurs dispositifs de mesure (7) pour capter la résistance à l'écoulement d'un filtre remplaçable (2), et un dispositif comparateur pour comparer une résistance à l'écoulement mesurée avec une ou plusieurs valeurs limites prédéterminées, ainsi qu'un dispositif de sortie (18, 20) pour les filtres remplaçables régénérés (2).

10. Installation de traitement selon la revendication 9, caractérisée par au moins un dispositif d'acheminement (1, 21) pour les filtres remplaçables à régénérer (2).

11. Installation de traitement selon la revendication 9 ou 10, caractérisée par un dispositif pour capter le type du filtre remplaçable (2).

12. Installation de traitement selon la revendication 11, caractérisée en ce qu'à un type de filtre remplaçable est associée une ou plusieurs valeurs limites.

13. Installation de traitement selon l'une des revendications 9 à 12, caractérisée par un dispositif (12, 22) pour écarter des filtres remplaçables (2) inutilisables.

14. Installation de traitement selon l'une des revendications 10 à 13, caractérisée par un dispositif (8) pour séparer des restes de fluide d'un moyen de rinçage utilisé dans le dispositif de rinçage (4).

15. Installation de traitement selon l'une des revendications 10 à 14, caractérisée par un dispositif (10, 13, 22) pour enlever un anneau d'étanchéité usagé (11) du filtre remplaçable (2) et monter un nouvel anneau d'étanchéité (11).

16. Installation de traitement selon l'une ou plusieurs des revendications 10 à 17, caractérisée en ce que l'un des dispositifs de mesure (7) est intégré dans le dispositif de rinçage (4).

17. Installation de traitement selon la revendication 10, caractérisée en ce que le dispositif d'acheminement est une bande transporteuse linéaire (1).

18. Installation de traitement selon la revendication 10, caractérisée en ce que le dispositif d'acheminement est une table tournante (21).

19. Installation de traitement selon la revendication 17 ou 18, caractérisée en ce que le dispositif d'acheminement présente une station de chargement automatique (3, 20) pour prélever des filtres remplaçables (2) dans un récipient de transport adapté (19).

20. Récipient de transport empilable pour recevoir des filtres remplaçables (2) et destiné à être utilisé dans une installation de traitement selon l'une des revendication 9 à 22, caractérisé par un fond (26) qui est agencé en carter de collecte pour du fluide sortant des filtres remplaçables (2), et porte les filtres remplaçables (2) à transporter, un fond intermédiaire (28) muni de multiples ouvertures (29), à travers lesquelles les filtres remplaçables (2) à transporter peuvent être posés sur le fond (26), les ouvertures (29) étant chacune au moins partiellement recouverte par une manchette élastique (30) munie de fentes (31), qui s'adapte aux filtres remplaçables (2) à transporter et soutient ceux-ci.

21. Récipient de transport selon la revendication 20, caractérisé en ce que les lentes (31) subdivisent la manchette (30) en segments (32) de taille sensiblement égale.

22. Récipient de transport selon la revendication 20 ou 21, caractérisé en ce que le fond (26) présente un certain nombre de zones magnétiques, associées chacune à une ouverture (29) dans le fond intermédiaire (28).

23. Récipient de transport selon la revendication 22, caractérisé en ce que les zones magnétiques sont constituées par des aimants (33) fixés sur le fond (26).

24. Récipient de transport selon la revendication 23, caractérisé en ce que les aimants (33) sont au moins en partie enveloppés de matière plastique.

25. Récipient de transport selon l'une des revendications 20 à 24, caractérisé en ce que sur le fond (26) sont disposés un certain nombre d'éléments de soutien (34) associés chacun à une ouverture (29) et s'étendant à peu près concentriquement à celle-ci.

26. Récipient de transport selon la revendication 25, caractérisé en ce que l'élément de soutien (34) est sensiblement annulaire.
